# EUROPÄISCHE PATENTSCHRIFT

(11) **EP 0 534 926 B1**
(45) Veröffentlichungstag und Bekanntmachung des Hinweises auf die Patenterteilung: **20.03.1996**
(21) Anmeldenummer: 92890189.1
(22) Anmeldetag: 01.09.1992
(51) Int. Cl.: F16D 3/72, F16D 3/76, F16D 3/80

(54) **Kupplungsglied**
Coupling element
Elément d'accouplement

(30) Priorität: 24.09.1991 AT 1922/91
(43) Veröffentlichungstag der Anmeldung: 31.03.1993
(73) Patentinhaber: DR. ING. GEISLINGER & CO. SCHWINGUNGSTECHNIK GESELLSCHAFT m.b.H., A-5020 Salzburg (AT)
(72) Erfinder: Pfeifer, Peter, Dipl.-Ing., A-5020 Salzburg (AT)
(74) Vertreter: Hübscher, Heiner, Dipl.-Ing.

(56) Entgegenhaltungen:
- DE-A- 3 517 681
- FR-A- 2 647 168
- US-A- 1 445 272
- US-A- 3 885 657

## Beschreibung

Die Erfindung bezieht sich auf ein biegeelastisches Kupplungsglied zum Einbau in eine drehmomentübertragende Antriebsverbindung mit einem Rohrteil und wenigstens einem stirnseitig anschließenden Flanschteil, der zwischen einem äußeren Befestigungsbereich und einem inneren Übergangsbereich einen Verformungsbereich aufweist.

Kupplungsglieder mit Rohr- und Flanschteil aus Metall oder faserverstärktem Kunststoff haben sich bereits bestens bewährt, da sie bei ihrem Einsatz als Verbindungselement zwischen den beiden Hälften einer Wellenkupplung oder unmittelbar als Wellenteil in einem Antriebsstrang nicht nur wegen ihrer Torsionsfestigkeit eine einwandfreie Drehmomentübertragung gewährleisten, sondern auch wegen der Biegefähigkeit ihrer membranförmigen Flanschteile einen gewissen Versatz der miteinander zu kuppelnden Antriebsteile auszugleichen erlauben. Neben den aus der EP-A1-0 413 677 bekannten Kupplungsgliedern mit im wesentlichen in einer achsnormalen Ebene liegenden Flanschteilen, deren Biegeelastizität und Verformbarkeit recht beschränkt sind, gibt es gemäß der DE-A-35 17 681 auch schon Kupplungsglieder mit Flanschteilen, die einen Verformungsbereich aus einer ringartig konzentrisch zur Flanschteilachse verlaufenden, im Querschnitt wellenförmigen Profilierung bilden. Durch diese Wellenprofilierung läßt sich die Torsionssteifigkeit einerseits und die Winkelund Axialbeweglichkeit anderseits verbessern, doch bleibt eine Radialsteifigkeit erhalten, so daß ein Kupplungsglied mit nur einem Flanschteil von vornherein höchstens zum Ausgleich eines axialen oder winkeligen Versatzes der miteinander zu kuppelnden Antriebsteile geeignet ist. Für den Ausgleich eines radialen Versatzes müssen Kupplungsglieder mit beidseits am Rohrteil anschließenden Flanschteilen eingesetzt werden, bei denen wiederum die Länge des zwischenliegenden Rohrteiles mitbestimmend für die Größe der Ausgleichskapazität ist.

Der Erfindung liegt daher die Aufgabe zugrunde, diese Mängel zu beseitigen und ein Kupplungsglied der eingangs geschilderten Art zu schaffen, das sich durch seine besondere Verformbarkeit und seine allgemeine, von der Baulänge weitgehend unabhängige Ausgleichsfähigkeit auszeichnet.

Die Erfindung löst diese Aufgabe dadurch, daß der Verformungsbereich koaxiale, abwechselnd einander entgegengesetzt sich in axialer Richtung öffnende Konusringe umfaßt und aus einzelnen vorgefertigten Konusringen zusammengesetzt ist. Durch diese Konusringe entsteht gewissermaßen ein ringförmiger Balg als Verformungsbereich, der sich nicht nur axial aus seiner achsnormalen Lage auslenken, sondern sich auch radial verformen läßt, so daß ein einziger Flanschteil den Ausgleich eines beliebigen Versatzes, sei es ein axialer, ein winkeliger oder auch radialer Versatz, ermöglicht. Die Anordnung einer entsprechenden Anzahl von Konusringen im Verformungsbereich führt außerdem gegenüber einem ebenen oder wellenprofilierten membranartigen Flanschteil zu einer beträchtlich größeren Torsionselastizität, die eine erstaunliche schwingungsdämpfende Wirkung mit sich bringt und das Kupplungsglied für weiteste Anwendungsbereiche bestens einsatzfähig macht. An und für sich kann das Kupplungsglied aus jedem geeigneten Material, beispielsweise aus Metall oder faserverstärktem Kunststoff bestehen. Durch die zusammengesetzte Bauweise des Verformungsbereiches ergibt sich dabei eine verhältnismäßig aufwandsarme, rationelle Herstellung. Die einzelnen Konusringe lassen sich individuell gestalten und an die jeweiligen Verhältnisse anpassen, so daß sich durch eine entsprechende Wahl der zusammenzusetzenden Konusringe die Verformungs- und Übertragungseigenschaften der entstehenden Flanschteile gut beeinflussen lassen.

Bilden die Konusringe zur gegenseitigen Verbindung ineinandergreifende Randansätze, kann auf einfache Weise durch Schweißen, Kleben, Schrauben, Nieten od. dgl. die erforderliche Festigkeit der Verbindung sichergestellt werden.

Weisen die Randansätze einen zentralsymmetrischen, aber von der Kreisform abweichenden Verlauf auf, kommt es zu einer hochbelastbaren Kombination aus kraft- und formschlüssiger Verbindung, wobei der Verlauf polygonal, aber auch eine aus verschiedenen Bogen zusammengesetzte Rundform sein kann.

Zur Anpassung der Ubertragungs- und Verformungsverhältnisse der Flanschteile an die jeweiligen Gegebenheiten der Antriebsverbindung können die Konusringe unterschiedliche Höhe und/oder Öffnungswinkel und/oder Wandstärke besitzen und es ist auch möglich, Konusringe mit unterschiedlich geformten Erzeugenden, also Konusringe mit geraden oder geeignet gekrümmten Erzeugenden vorzusehen, womit auch die Verformungsund Belastungseigenschaften des Flanschteiles in einer radialen Abhängigkeit beeinflußt werden können.

Ist bei der sich durch die Konusringe im Axialschnitt ergebenden Zickzacklinie das Verhältnis der durchschnittlichen Spitzenhöhe zum durchschnittlichen Spitzenabtand größer als 1, entsteht ein den meisten Anforderungen an das Ausgleichsverhalten des Kupplungsgliedes genügender Verformungsbereich.

Dem Flanschteil mit dem Konusringe umfassenden Verformungsbereich kann auch ein zweiter Flanschteil mit einem membranartigen Verformungsbereich zugeordnet sein, so daß sich durch die Kombination aus Ringbalg und Membran eine zusätzliche Möglichkeit zur Beeinflussung des Übertragungs- und Ausgleichsverhaltens ergibt. Der zweite Flanschteil kann dabei der eine Teil eines Doppelflansches sein, er kann aber genausogut auch ein Flanschteil eines anderen am Kupplungsglied anschließenden Antriebsteiles sein od. dgl..

Nach einer speziellen Ausgestaltung der Erfindung kann das Kupplungsglied als Dämpfungsglied eines Drehschwingungsdämpfers verwendet werden, wobei der Flanschteil einen eine Schwungmasse bildenden Befestigungsbereich aufweist. Die besondere Drehelastizität des Verformungsteiles wird hier direkt zur Drehschwingungsdämpfung genutzt und es entsteht auf rationelle Weise ein sehr kompakter und in seinem Verhalten in weiten Bereichen an die jeweiligen Anforderungen anpaßbarer Drehschwingungsdämpfer.

Dabei können in vorteilhafter Weise zur Erhöhung des Dämpfungseffektes zwei beidseits am Befestigungsbereich angesetzte Abdeckplatten od. dgl. eine den Verformungsbereich in sich aufnehmende Dämpfungskammer bilden, die vorzugsweise mit einer Dämpfungsflüssigkeit gefüllt ist, wodurch es infolge der zwischen den Konusringen auf die Flüssigkeit einwirkenden Scherkräfte zur gewünschten Beeinflussung des Dämpfungseffektes kommt.

In der Zeichnung ist der Erfindungsgegenstand rein schematisch veranschaulicht, und zwar zeigen
- Fig. 1, 2 und 3: drei Ausführungsbeispiele eines erfindungsgemäßen Kupplungsgliedes jeweils im hälftigen Axialschnitt,
- Fig. 4 und 5: einen Kupplungsring dieser Kupplungsglieder im hälftigen Axialschnitt bzw. in hälftiger Stirnansicht und
- Fig. 6 und 7: zwei besondere Anwendungsbeispiele eines erfindungsgemäßen Kupplungsgliedes wiederum im hälftigen Axialschnitt.

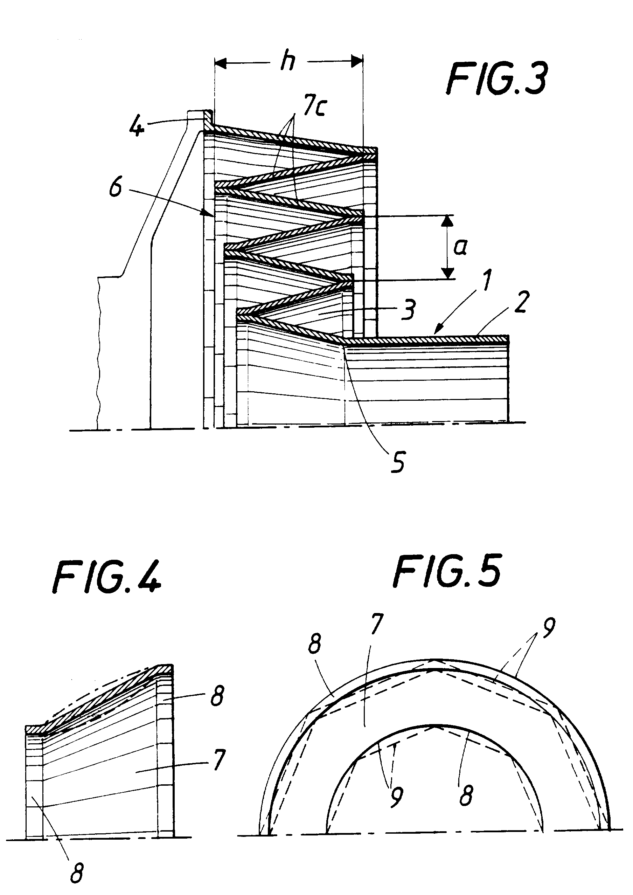

Ein Kupplungsglied 1, insbesondere zum Einbau in einer nicht weiter dargestellten Ausgleichskupplung, umfaßt einen Rohrteil 2 und einen stirnseitig anschließenden Flanschteil 3, wobei der Rohrteil 2 selbstverständlich auch an beiden Stirnseiten mit Flanschteilen 3 bestückt sein kann. Der Flanschteil 3 weist zwischen einem äußeren Befestigungsbereich 4 zur Verbindung des Kupplungsgliedes 1 beispielsweise mit einem motorseitigen Antriebsteil und einem Übergangsbereich 5 zum Rohrteil 2 hin einen Verformungsbereich 6 auf, der in Art eines Ringbalges aus koaxialen, abwechselnd einander entgegengesetzt sich öffnenden Konusringen 7 besteht, wobei der Verformungsbereich 6 aus einzelnen vorgefertigten Konusringen (Fig. 4 und 5) zusammengesetzt ist. Dieser balgförmige Verformungsbereich 6 erlaubt eine Verformung des Flanschteiles 3 praktisch in jeder Richtung gegenüber dem Rohrteil 2, so daß dieses Kupplungsglied 1 auch den Ausgleich eines beliebigen Achsversatzes der miteinander zu kuppelnden Teile ermöglicht. Durch ein radiales Verformen des Flanschteiles 3 wird ein radialer Versatz ausgeglichen, durch eine axiale Verschiebung des Flanschteiles gegenüber dem Rohrteil 2 ein axialer Versatz, eine Auslenkung des Flanschteiles 3 aus der Achsnormalebene seiner Ausgangslage führt zum Ausgleich eines Wineklversatzes und durch eine Kombination dieser Ausgleichsbewegungen läßt sich innerhalb der konstruktiv bedingten Grenzen jeder Versatz ausgleichen. Dazu kommt noch, daß die Konusringe an sich torsionsfest sind und daher eine einwandfreie Drehmomentübertragung gewährleisten, daß sich aber eine entsprechende Torsionselastizität erreichen läßt, die zusätzlich eine Schwingungsdämpfung mit sich bringt.

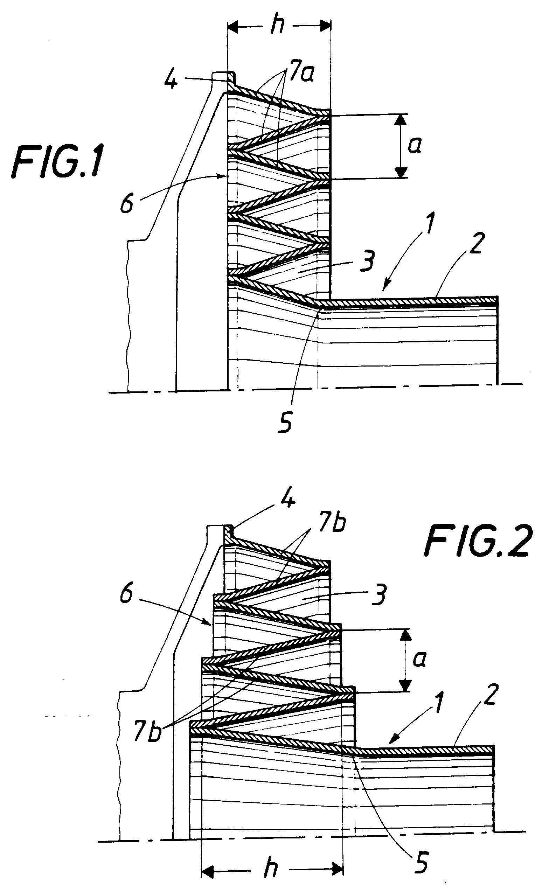

Zur Beeinflussung des Ausgleichs- und Dämpfungsverhaltens, zur Anpassung der Verformungseigenschaften und des Verformungsverlaufes können die Konusringe 7 unterschiedlichst ausgestaltet sein. Wie in Fig. 1 angedeutet, werden Konusringe 7a mit geraden Erzeugenden und konformer Ausgestaltung verwendet, im Ausführungsbeispiel nach Fig. 2 sind Konusringe 7b vorgesehen, die radial auswärts abnehmende Höhe aufweisen, und im Ausführungsbeispiel nach Fig. 3 sind Konusringe 7c mit radial auswärts ansteigender Höhe veranschaulicht. Die im Axialschnitt sich ergebende Zickzacklinie weist daher gemäß Fig. 1 eine gleichbleibende Spitzenhöhe h und einen gleichbleibenden Spitzenabstand a auf, gemäß Fig. 2 ist die Spitzenhöhe h nach außen hin abnehmend und auch der Spitzenabstand a nimmt ab und gemäß Fig. 3 nehmen die Spitzenhöhe h und der Spitzenabstand a radial auswärts zu. Das Verhältnis zwischen den Durchschnittswerten der Durchschnittshöhe und des Spitzenabstandes h/a ist dabei aber stets 1 oder größer als 1.

Ist der Verformungsbereich 6 aus einzelnen Konusringen 7 zusammengesetzt, was die Herstellung wesentlich vereinfacht und auch das Zusammensetzen des Verformungsbereiches aus unterschiedlichen Konusringen erleichtert, bilden die Konusringe 7, wie in Fig. 4 und 5 angedeutet, axial vorragende Randansätze 8, so daß die aufeinanderfolgenden Konusringe mit ihren Randansätzen ineinandergreifen und durch Verkleben, Verschweißen, Verschrauben, Vernieten u. dgl. gut miteinander verbindbar sind. Um zusätzlich zur kraftschlüssigen auch eine formschlüssige Verbindung zu erzielen, kann der Verlauf 9 dieser Randansätze einen von der Kreisform abweichenden, beispielsweise polygonalen Verlauf (strichlierte Darstellung in Fig. 5) aufweisen, wobei der eigentliche Konusring von der Formgebung dieses Verlaufes unabhängig bleibt, um eine Versteifung zu vermeiden. Dabei läßt sich aber die Erzeugende der Konusringe je nach gewünschter Verformbarkeit frei wählen, beispielsweise lassen sich außer Konusringen 7 mit geraden Erzeugenden auch Konusringe mit entsprechend gekrümmten Erzeugenden (strichlierte bzw. strichpunktierte Darstellung in Fig. 4) ausbilden.

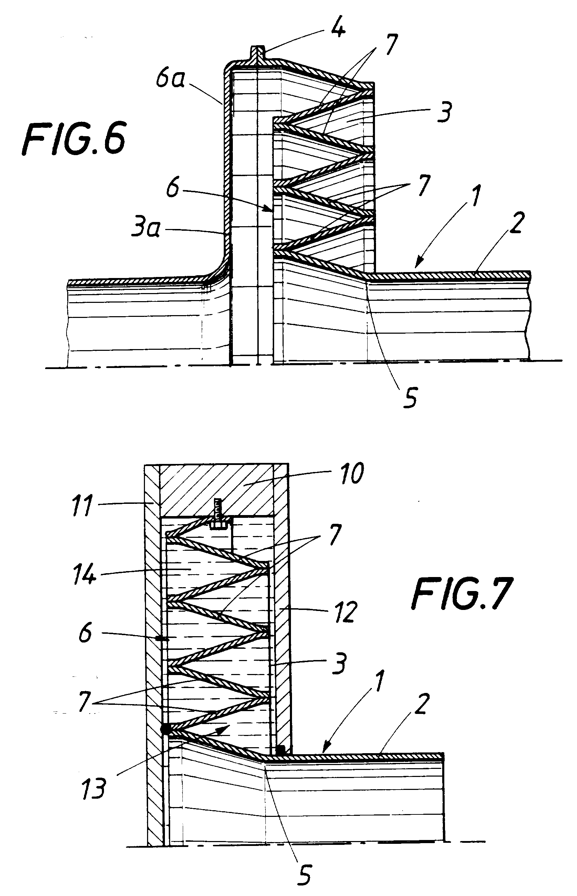

Eine weitere Möglichkeit einer Anpassung des Ausgleichsverhaltens eines Kupplungsgliedes 1 an unterschiedlichste Verhältnisse ist in Fig. 6 angedeutet. Hier ist dem Flanschteil 3, dessen Verformungsbereich 6 Konusringe 7 umfaßt, ein zweiter Flanschteil 3a zugeordnet, dessen Verformungsbereich eine ebene, achsnormale Membran 6a ergibt. Dieser zweite Flanschteil 3a wird über den Befestigungsbereich 4 an den Flanschteil 3 angeschlossen, so daß entweder ein Doppelflansch für das Kupplungsglied 1 entsteht oder der Flanschteil 3a als Anschluß eines zugehörigen, nicht weiter dargestellten Antriebsteiles dient.

Ein spezielles Anwendungsbeispiel eines erfindungsgemäßen Kupplungsgliedes ist in Fig. 7 veranschaulicht, gemäß dem das Kupplungsglied 1 als Dämpfungsglied eines Drehschwingungsdämpfers vorgesehen ist. Hier bildet der Befestigungsbereich eine ringförmige Schwungmasse 10, so daß die Drehelastizität des Verformungsbereiches 6 zur Dämpfung genutzt werden kann. Eine Steigerung der Dämpfungswirkung ergibt sich, wenn durch beidseits an der Schwungmasse 10 befestigte Abdeckplatten 11, 12 eine Dämpfungskammer 13 zur Aufnahme des Verformungsteiles 6 entsteht, wobei eine Dämpfungsflüssigkeit 14 in der Dämpfungskammer 13 infolge der von den Konusringen 7 auf die Flüssigkeit übertragenen Scherkräfte die Dämpfungswirkung beeinflußt. Es kommt zu einem überaus kompakten Drehschwingungsdämpfer, der beispielsweise über den Rohrteil 2 an einen Antriebsstrang anschließbar ist.

## Patentansprüche

1. Biegeelastisches Kupplungsglied (1) zum Einbau in eine drehmomentübertragende Antriebsverbindung, mit einem Rohrteil (2) und wenigstens einem stirnseitig anschließenden Flanschteil (3), der zwischen einem äußeren Befestigungsbereich (4) und einem inneren Übergangsbereich (5) einen Verformungsbereich (6) aufweist, dadurch gekennzeichnet, daß der Verformungsbereich (6) koaxiale, abwechselnd einander entgegengesetzt sich in axialer Richtung öffnende Konusringe (7) umfaßt und aus einzelnen vorgefertigten Konusringen (7) zusammengesetzt ist.

2. Kupplungsglied nach Anspruch 1, dadurch gekennzeichnet, daß die Konusringe (7) zur gegenseitigen Verbindung ineinandergreifende Randansätze (8) bilden.

3. Kupplungsglied nach Anspruch 2, dadurch gekennzeichnet, daß die Randansätze (8) einen zentralsymmetrischen, aber von der Kreisform abweichenden Verlauf (9) aufweisen.

4. Kupplungsglied nach einem der Ansprüche 1 bis 3, dadurch gekennzeichnet, daß die Konusringe (7, 7a, 7b, 7c) unterschiedliche Höhe und/oder Öffnungswinkel und/oder Wandstärke besitzen.

5. Kupplungsglied nach einem der Ansprüche 1 bis 4, dadurch gekennzeichnet, daß Konusringe (7) mit unterschiedlich geformten Erzeugenden vorgesehen sind.

6. Kupplungsglied nach einem der Ansprüche 1 bis 5, dadurch gekennzeichnet, daß bei der sich durch die Konusringe (7a, 7b, 7c) im Axialschnitt ergebenden Zickzacklinie das Verhältnis der durchschnittlichen Spitzenhöhe (h) zum durchschnittlichen Spitzenabstand (a) wenigstens 1 ist.

7. Kupplungsglied nach einem der Ansprüche 1 bis 6, dadurch gekennzeichnet, daß dem Flanschteil (3) mit dem Konusringe (7) umfassenden Verformungsbereich (6) ein zweiter Flanschteil (3a) mit einem membranartigen Verformungsbereich (6a) zugeordnet ist.

8. Kupplungsglied nach einem der Ansprüche 1 bis 6, gekennzeichnet durch die Verwendung als Dämpfungsglied für einen Drehschwingungsdämpfer, wobei der Flanschteil (3) einen eine Schwungmasse (10) bildenden Befestigungsbereich aufweist.

9. Kupplungsglied nach Anspruch 8, dadurch gekennzeichnet, daß zwei beidseits am Befestigungsbereich bzw. an der Schwungmasse (10) angesetzte Abdeckplatten (11, 12) od. dgl. eine den Verformungsbereich (6) in sich aufnehmende Dämpfungskammer (13) bilden, die vorzugsweise mit einer Dämpfungsflüssigkeit (14) gefüllt ist.

## Claims

1. A resiliently bending coupling element (1) for incorporation in a torque-transmitting drive connection, comprising a tube part (2) ending in at least one flange part (3) which comprises a deformation region (6) between an outer securing region (4) and an inner transition region (5), characterised in that the deformation region (6) comprises coaxial cone rings (7) opening alternately in opposite axial directions and is made up of individual prefabricated cone rings (7).

2. A coupling element according to claim 1, characterised in that the cone rings (7) form interlocking edge extensions (8) for attaching to one another.

3. A coupling element according to claim 2, characterised in that the edge extensions (8) have a shape (9) which is symmetrical around a centre but is non-circular.

4. A coupling element according to any of claims 1 to 3, characterised in that the cone rings (7, 7a, 7b, 7c) differ in height and/or aperture angle and/or wall thickness.

5. A coupling element according to any of claims 1 to 4, characterised in that cone rings (7) with differently shaped generatrices are provided.

6. A coupling element according to any of claims 1 to 5, characterised in that in the case of the zig-zag line in axial section through the cone rings (7a, 7b, 7c) the ratio of the average peak height (h) to the average distance (a) between peaks is at least 1.

7. A coupling element according to any of claims 1 to 6, characterised in that the flange part (6) with the deformation region (6) comprising the cone rings (7) is associated with a second flange part (3a) with a diaphragm-like deformation region (6a).

8. A coupling element according to any of claims 1 to 6, characterised by use as a damping element for a torsional vibration damper, the flange part (3) having a securing region in the form of a flywheel mass (7).

9. A coupling element according to claim 8, characterised in that two cover plates (11, 12) or the like disposed on the two sides of the securing region or the flywheel mass (10) form a damping chamber (13) which receives the deformation region (7) and is preferably filled with a damping fluid (14).

## Revendications

1. Organe d'accouplement (1) élastique à la flexion et destiné à être incorporé à une liaison d'entraînement à transmission des couples, comprenant une partie tubulaire (2) et au moins une partie formant bride (3) qui se raccorde à celle-ci du côté frontal et qui présente une zone de déformation (6) entre une zone de fixation extérieure (4) et une zone de transition intérieure (5), caractérisé par le fait que la zone de déformation (6) comprend des bagues coniques coaxiales (7) qui sont alternativement opposées entre elles et qui s'ouvrent dans la direction axiale, et qu'elle est assemblée à partir de bagues coniques individuelles (7) qui sont préfabriquées.

2. Organe d'accouplement selon la revendication 1, caractérisé par le fait que les bagues coniques (7) forment des épaulements annulaires (8) qui s'interpénètrent et qui sont destinés à leur liaison mutuelle.

3. Organe d'accouplement selon la revendication 2, caractérisé par le fait que les épaulements annulaires (8) présentent un tracé (9) qui est symétrique par rapport au centre, mais qui s'écarte de la forme circulaire.

4. Organe d'accouplement selon l'une des revendications 1 à 3, caractérisé par le fait que les bagues coniques (7, 7a, 7b, 7c) présentent une hauteur différente et/ou un angle d'ouverture différent et/ou une épaisseur de la paroi différente.

5. Organe d'accouplement selon l'une des revendications 1 à 4, caractérisé par le fait que les bagues coniques (7) sont pourvues de génératrices présentant des formes différentes.

6. Organe d'accouplement selon l'une des revendications 1 à 5, caractérisé par le fait qu'en ce qui concerne la ligne en zigzag qui représente les bagues coniques (7a, 7b, 7c) lorsqu'elles sont vues en coupe axiale, le rapport entre la hauteur moyenne aux pointes (h) et la distance moyenne entre les pointes (a) est au moins égal à 1.

7. Organe d'accouplement selon l'une des revendications 1 à 6, caractérisé par le fait qu'à la partie formant bride (3) qui présente la zone de déformation (6) pourvue des bagues coniques (7) est associée une deuxième partie formant bride (3a) dont la zone de déformation (6a) est analogue à une membrane.

8. Organe d'accouplement selon l'une des revendications 1 à 6, caractérisé par son utilisation comme organe amortisseur destiné à un amortisseur de vibrations en rotation, la partie formant bride (3) présentant une zone de fixation qui constitue une masse d'inertie (10).

9. Organe d'accouplement selon la revendication 8, caractérisé par le fait que deux plaques de recouvrement (11, 12) ou similaires sont posées des deux côtés sur la zone de fixation ou sur la masse d'inertie (10), respectivement, et qu'elles constituent une chambre d'amortissement (13) qui reçoit intérieurement la zone de déformation (6) et qui est remplie de préférence par un liquide amortisseur (14).
